# NEUE EUROPÄISCHE PATENTSCHRIFT

(11) **EP 2 766 285 B2**
(45) Veröffentlichungstag und Bekanntmachung des Hinweises auf die Entscheidung über den Einspruch: **06.04.2022**
(45) Hinweis auf die Patenterteilung: 12.04.2017
(21) Anmeldenummer: 12772916.8
(22) Anmeldetag: 10.10.2012
(51) Int. Cl.: B65G 1/137

(54) **SYSTEM UND VERFAHREN ZUM MANUELLEN BATCH-PICKEN UNTER ANWENDUNG DES WARE-ZUM-MANN-PRINZIPS**
SYSTEM AND PROCEDURE FOR MANUAL BATCH-PICKING USING THE GOODS-TO-MAN PRINCIPLE
SYSTÈME ET PROCÉDÉ DE PRÉLÈVEMENT MANUEL PAR LOTS SELON LE PRINCIPE MARCHANDISES VERS L'HOMME

(30) Priorität: 10.10.2011 DE 102011116081
(43) Veröffentlichungstag der Anmeldung: 20.08.2014
(73) Patentinhaber: SSI Schäfer Automation GmbH, 8051 Graz-Gösting (AT)
(72) Erfinder: WINKLER, Max, A-8010 Graz (AT)
(74) Vertreter: Witte, Weller & Partner Patentanwälte mbB
(86) Internationale Anmeldenummer: PCT/EP2012/070044
(87) Internationale Veröffentlichungsnummer: WO 2013/053747

(56) Entgegenhaltungen:
- EP-A2- 1 452 462
- EP-B1- 1 572 558

## Beschreibung

Die vorliegende Erfindung betrifft ein Kommissioniersystem, das nach dem "Ware-zum-Mann"-Prinzip betrieben wird und insbesondere mit einer Pick-Station ausgestattet ist, bei der die zu kommissionierenden Artikel vorzugsweise einzeln gegriffen und an (Zwischen-)Ladungsträger manuell abgegeben, d.h. kommissioniert, werden. Die Erfindung betrifft ferner ein entsprechendes Verfahren zum parallelen, manuellen "Batch-Picken" einer Vielzahl von Kommissionieraufträgen.

Bei dem "Ware-zum-Mann"-Prinzip werden die zu kommissionierenden Waren, Artikel, Produkt, Stückgüter, etc. zu der Bedienperson hintransportiert, damit die Bedienperson, die nachfolgend auch Kommissionierer genannt werden wird, aus Gründen der Ergonomie möglichst wenig bis gar nicht laufen muss, um einen Kommissioniervorgang (Greifen und Abgeben) durchzuführen. Die zu kommissionierenden Stückgüter werden mittels Ladehilfsmitteln innerhalb des Systems und insbesondere von und zur Pick-Station (d.h. einem Kommissionierarbeitsplatz) transportiert, wie zum Beispiel mittels Behältern, Tablaren, Paletten, Kartons oder Ähnlichem. Die zu kommissionierenden Stückgüter sind in Form von sogenannten "SKUs" (Storage Keeping Units) bzw. (Lager-)Bestandseinheiten in einem Lager bevorratet und werden üblicherweise mittels einer Fördertechnik zum Kommissionierarbeitsplatz transportiert, der nachfolgend auch als "Pick-Station" bezeichnet werden wird.

Da der Kommissionierer beim "Ware-zum-Mann"-Prinzip eigentlich nicht mehr laufen muss, weil die zu kommissionierenden Stückgüter direkt zu ihm hin transportiert werden, werden die Kunden- bzw. Kommissionieraufträge häufig gemäß einem Kommissionierprinzip abgearbeitet, das als "Batch-Picking" bezeichnet wird. Beim "Batch-Picking" werden mehrere Kundenaufträge artikelorientiert zusammengefasst, um möglichst wenige SKUs aus dem Lager auslagern und nach einer erfolgten Kommissionierung in das Lager zurückbewegen zu müssen. Bei der artikelorientierten Analyse schaut man auf eine Gruppe von Kundenaufträgen, die alle Bestellungen (Auftragszahlen) enthalten, die einen jeweiligen Artikeltyp betreffen und erzeugt dann artikelorientierte Transportbefehle für die SKUs. Die SKU, die diesem jeweiligen Artikeltyp entspricht, wird dann ausgelagert und zum Kommissionierplatz transportiert. Am Kommissionierplatz greift der Kommissionierer alle Artikel des jeweiligen Artikeltyps und gibt sie in einer vorgegebenen Anzahl in entsprechend vorgesehene Auftragsbehälter ab. Jedem Auftragsbehälter ist einer der Kommissionieraufträge zugeordnet, so dass die Abgabe der Artikel auftragsorientiert erfolgt. Die Auftragsbehälter werden am Kommissionierplatz so lange vorgehalten, bis alle Artikeltypen des zugehörigen Kommissionierauftrags in den Auftragsbehälter gegeben wurden. Man spricht in diesem Zusammenhang auch von einer zweistufigen Kommissionierung. Beim Batch-Picking werden also mehrere Aufträge gleichzeitig abgearbeitet.

Unter einer "Batch" wird nachfolgend eine Menge eines bestimmten Artikeltyps verstanden, die der Summe aller Artikel eines jeweiligen Artikeltyps entspricht, der in allen Kommissionieraufträgen einer vorher definierten Gruppe von Kommissionieraufträgen vorkommt. Alle Artikel einer Batch können parallel entnommen werden, indem eine - üblicherweise einzige - SKU am Kommissionierplatz bereitgestellt wird.

Ein derartiger Kommissionierarbeitsplatz, der nach dem "Ware-zum-Mann"-Prinzip arbeitet und der mit Batch-Picking betrieben wird, ist im europäischen Patent EP 1 572 558 B2 beschrieben. Dort ist ein Kommissionierarbeitsplatz gezeigt, der einen Auftragsbehälterpuffer zur Bevorratung mehrerer Auftragsbehälter umfasst, in welche die zu kommissionierenden Stückgüter abgegeben werden, nachdem der Kommissionierer die zu kommissionierenden Stückgüter aus einem Lagerbehälter entnommen hat, der automatisiert über eine Lagerbehälter-Fördertechnik zum Kommissionierarbeitsplatz transportiert wurde. Dieser Kommissionierarbeitsplatz erfüllt zwar bereits hohe ergonomische Anforderungen, weil zum Beispiel die Lagerbehälter-Fördertechnik im Arbeitsbereich des Kommissionierers schräggestellt ist. Der Kommissionierer muss ferner zum Entnehmen und Abgeben wenig laufen. Die Entnahme- und Abgabevorgänge können durch eine Lichtführung unterstützt werden, indem Quell- und/oder Zielorte mittels Licht markiert werden. Dennoch muss sich der Kommissionierer stark konzentrieren. Zum einen muss der Kommissionier sicherstellen, dass er immer aus der markierten Quelle entnimmt und immer an das markierte Ziel abgibt. Zum anderen muss der Kommissionierer aufpassen, dass er immer die richtige Anzahl von Stückgütern aus dem Lagerbehälter (Quelle) entnimmt bzw. immer die richtige Anzahl von Stückgütern in den richtigen Auftragsbehälter (Ziel) abgibt. Häufig kommt es zu Kommissionierfehlern, weil eine falsche Anzahl von Stückgütern gegriffen und/oder abgegeben wird. Dieses Problem verstärkt sich, wenn sehr kleine Stückgüter in größeren, verschiedenen Stückzahlen auf mehrere Auftragsbehälter verteilt werden müssen. In diesem Fall greift der Kommissionierer häufig mehrere Stückgüter aus dem Lagerbehälter, zählt eine entsprechende Anzahl von Stückgütern in der Hand ab und wirft die erste abgezählte Menge in den ersten markierten Auftragsbehälter. Danach zählt er eine zweite Menge ab und wirft sie in den zweiten markierten Auftragsbehälter. Dieser Vorgang wird so lange wiederholt, bis alle markierten Auftragsbehälter abgearbeitet sind. Danach findet ein Lagerbehälterwechsel statt. Der Vorgang beginnt dann für einen anderen Artikeltyp von Neuem.

Ein weiterer Nachteil des Kommissionierarbeitsplatzes der EP 1 572 558 B2 ist darin zu sehen, dass üblicherweise mehrere Lagerbehälter und Auftragsbehälter gleichzeitig bereitgestellt werden, so dass die Gefahr besteht, dass der Kommissionier in einen "falschen" Lagerbehälter greift bzw. abgibt. Noch ein Problem ist darin zu sehen, dass der Raum oft nicht ausreicht, um alle Auftragsbehälter gleichzeitig im Arbeitsbereich des Kommissionierarbeitsplatzes bereitzustellen. Eine derartige Knappheit an Raum führt dazu, dass die Auftragsbehälter ausgetauscht werden müssen, bevor die entsprechenden Kommissionieraufträge, die den Auftragsbehältern zugeordnet sind, fertig abgearbeitet sind. Dies erhöht die Zykluszeit. Außerdem ist dann die Wahrscheinlichkeit, dass der Kommissionierer dennoch laufen muss, um Entnahme- und Abgabevorgänge durchzuführen, umso höher, je größer der Arbeitsbereich (räumlich) ist. Die Größe des Arbeitsbereichs steigt mit zunehmender Anzahl von Auftragsbehältern, die in dem Arbeitsbereich zwecks Abgabe vorgehalten werden.

Die EP 1 452 462 A2 zeigt ein Kommissioniersystem nach dem Oberbegriff des Anspruchs 1. Sowohl die Entnahme der Artikel aus dem bzw. den Lagerbehältern als auch die Abgabe der Artikel in den Auftragsbehälter wird jeweils mit einem separaten Lichtgitter überwacht, um den Transport, insbesondere den Austausch, der Lagerbehälter und des Auftragsbehälters zu steuern.

Es ist daher eine Aufgabe der vorliegenden Erfindung, ein ergonomisches System und Verfahren zum manuellen Kommissionierer von Stückgütern bereitzustellen, wobei nach dem "Ware-zum-Mann"-Prinzip gearbeitet wird, und zwar bei hoher Produktivität, geringen Zykluszeiten und hoher Kommissioniergenauigkeit. Die Produktivität wird durch die Kommissionierleistung (Anzahl gegriffener Stückgüter pro Zeiteinheit) gemessen. Die Zykluszeit entspricht der Zeit, die benötigt wird, um einen (Kunden-)Auftrag vom Auftragseingang bis zum Versand abzuarbeiten. Die Genauigkeit wird üblicherweise in Prozent gemessen und gibt an, wie groß der Anteil der richtig bzw. falsch kommissionierten Aufträge ist.

Diese Aufgabe wird durch Anspruch 1 gelöst.

Im Kommissioniersystem der Erfindung wird die Quote von Fehlkommissionierungen drastisch reduziert. Der Kommissionierer kann nur auf eine Quelle zugreifen und nur an eine Quelle abgeben. Die Anzahl der Zugriffe auf die Quelle wird erfasst, um den Austausch einer Quelle zu bewirken. Die Abgabe an die Zielstelle wird überwacht, um einen Austausch der Ladungsträger zu bewirken. Der Kommissionierer muss also keinerlei geistige Tätigkeit mehr durchführen, um den Kommissioniervorgang auszuführen. Er muss sich weder Gedanken über die Quelle noch das Ziel machen. Auch muss der Kommissionierer nicht selbst zählen. Eine manuelle Quittierung ist nicht erforderlich. Die Ladungsträger und die Lagerladehilfsmittel werden automatisiert ausgetauscht. Das "Zählen" übernimmt die Steuereinrichtung, insbesondere wenn immer nur ein einziger Artikel kommissioniert wird. Somit handelt es sich mehr um einen Um- bzw. Befüll-Arbeitsplatz als einen klassischen Kommissionierarbeitsplatz, weil die Artikel in einen Zwischenpuffer gegeben werden, bevor sie später an den Auftragsladungsträger abgegeben werden. Auf diese Weise wird die Produktivität gesteigert, die Zykluszeit verkürzt sich. Die Kommissionierleistung steigt.

Das Kommissioniersystem der Erfindung ist sowohl im Bereich des B2B als auch des B2C einsetzbar. Der Kommissioniervorgang erfolgt rein artikelorientiert. Auf aufwändige Kommissionierleitsysteme wie zum Beispiel Pick-by-Light, kann verzichtet werden. Die Kommissioniervorgänge sind weit im Voraus planbar.

Bei dieser Ausgestaltung ist die Ladungsträger-Fördertechnik ein Hängeförderer, wobei die Ladungsträger durch Taschen implementiert werden , die vorzugsweise über Transportadapter an den Hängeförderer koppeln.

Der Einsatz von Hängeförderern ist insbesondere bei der Zuordnung "1 Artikel pro Tasche" sehr raumsparend. Bekannte Sortieralgorithmen, die im Zusammenhang mit Hängeförderern eingesetzt werden, können benutzt werden, um die auftragsorientierte Sortierung der befüllten Taschen innerhalb kürzester Zeit und ohne Fehler zu bewirken.

Die Ladungsträger-Fördertechnik weist insbesondere einen Puffer auf, der stromaufwärts zur Abgabeposition liegt und an diese angrenzt, wobei die Steuereinrichtung angepasst ist, einen Lagerladehilfsmittelstrom und Ladungsträgerstrom so aufeinander abzustimmen, dass immer mindestens so viele Ladungsträger im Puffer bevorratet sind, wie Artikel (gemäß der aktuellen Batch) aus dem an der Entnahmeposition bereitgestellten Lagerladehilfsmittel entnommen werden müssen.

Durch diese Maßnahme ist gewährleistet, dass der Kommissionierer kontinuierlich, d.h. ohne Wartezeit und Unterbrechung, kommissionieren (Entnahme und Abgabe) kann.

Bei einer bevorzugten Ausführungsform ist die Steuereinrichtung angepasst, einen Ladungsträgerstrom zur Abgabeposition so zu koordinieren, dass für jeden Artikel einer Batch jeweils ein Ladungsträger ohne Wartezeit für den Kommissionierer im Arbeitbereich bereitgestellt wird.

Ferner wird immer nur ein einziger Artikel aus dem der Entnahmeposition bereitgestellten Lagerladehilfsmittel entnommen und in den an der Abgabeposition bereitgestellten Ladungsträger abgegeben. Diese Maßnahme stellt sicher, dass es zu keinen Fehlkommissionierungen kommt. Die Abgabeposition ist so dimensioniert, dass nur ein einziger (Ziel-)Ladungsträger zwecks Aufnahme eines entnommenen Artikels bereitgestellt werden kann. Eine Abgabe an einen anderen Ladungsträger, der nicht zur Aufnahme des entnommenen Artikels vorgesehen ist, ist so ausgeschlossen. Unter Berücksichtigung der Zeit, die der Kommissionierer braucht, um einen Artikel aus einem Lagerladehilfsmittel zu entnehmen, kann stromaufwärts zur Abgabeposition ein Abschnitt auf der Ladungsträger-Fördertechnik definiert werden, wo sich keine leeren Ladungsträger finden, in welche Kommissionierer fälschlicherweise den entnommenen Artikel abgeben könnte.

Ferner ist es von Vorteil, wenn das System zusätzlich einen Puffer- und Sortierbereich, eine Pack-Station und/oder eine Versandstation aufweist.

Insbesondere weist die Pick-Station mindestens eine weitere Überwachungseinrichtung auf, die unmittelbar stromaufwärts vor der Entnahmeposition, stromabwärts nach der Entnahmeposition, stromaufwärts vor der Abgabeposition und/oder stromabwärts nach der Abgabeposition angeordnet ist.

Diese zusätzlichen Überwachungseinrichtungen stellen sicher, dass die (übergeordnete) Steuereinrichtung jederzeit über dem Lagerladehilfsmittel- und Ladungsträgerstrom an neuralgischen Punkten der Fördertechniken informiert ist, nämlich vor und nach der Entnahmeposition sowie der Abgabeposition.

Bei einer weiteren bevorzugten Ausführungsform ist die Entnahmeposition so ausgebildet, dass der Kommissionierer manuell nur auf das an der Entnahmeposition bereitgestellte Lagerhilfsmittel zugreifen kann.

Mit dieser Maßnahme ist gewährleistet, dass der Kommissionierer auf kein anderes Lagerladehilfsmittel zugreifen kann als jenes, welches gerade zur Abarbeitung der aktuellen Batch angedient wurde. Diese Maßnahme verringert wiederum die Anzahl möglicher Fehler bzw. Fehlkommissionierungen.

In einer anderen vorteilhaften Ausgestaltung weist die Pick-Station ein geschlossenes Gehäuse auf, das bei der Entnahmeposition eine Öffnung aufweist, die so groß ist, dass nur auf das bereitgestellte Lagerladehilfsmittel zugegriffen werden kann, während der Kommissionierer auf Lagerladehilfsmittel, die im Arbeitsbereich auf der Lagerladehilfsmittel-Fördertechnik transportiert werden, nicht zwecks einer Artikelentnahme zugreifen kann.

Auch diese Maßnahme reduziert die Fehleranfälligkeit des Kommissioniersystems.

Insbesondere sind die Entnahmeposition und die Abgabeposition derart nahe zueinander angeordnet, dass der Kommissionierer zwischen der Entnahme und Abgabe eines Artikels nicht laufen muss.

Die Pick-Station ist somit besonders ergonomisch ausgebildet. Der Kommissionierer muss sich so wenig wie möglich bewegen, um den Kommissioniervorgang durchzuführen. Sowohl die Quellen als auch die Ziele werden ihm angedient, so dass sich der Kommissioniervorgang allein auf das Greifen und Abgeben des Artikels beschränkt. Es muss nicht quittiert werden.

Unter ergonomischen Gesichtspunkten ist es ebenfalls von Vorteil, wenn die Entnahmeposition in Bezug auf eine Raumhöhe unterhalb der Abgabeposition liegt, weil der Kommissionierer üblicherweise in das Lagerladehilfsmittel hineingreift und einen den das Lagerladchilfsmittel üblicherweise umgebenden Rand höhenmäßig mit dem entnommenen Artikel überwinden muss, so dass die Abgabe in den höher gelegenen Ladungsträger eine kontinuierliche Fortsetzung der Entnahmebewegung darstellt.

Weiter ist es von Vorteil, wenn die Steuereinrichtung angepasst ist, eine getaktete Bereitstellung der Lagerladehilfsmittel und der Ladungsträger an der Pick-Station zu bewirken.

Die getaktete Bereitstellung ist derart synchronisiert, dass, immer wenn der Kommissionierer einen Artikel entnommen hat, ein leerer Ladungsträger zur Abgabe des entnommenen Artikels bereits bereitgestellt ist.

Die oben genannte Aufgabe wird ferner durch ein Verfahren nach Anspruch 12 gelöst.

Die im Zusammenhang mit dem Kommissioniersystem erwähnten Vorteile spiegeln sich in analoger Weise im Verfahren der Erfindung wieder.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm eines Kommissioniersystems gemäß der Erfindung;
- Fig. 2: ein Blockdiagramm einer Pick-Station der Fig. 1;
- Fig. 3: eine perspektivische Ansicht einer exemplarischen Ausgestaltung einer Pick-Station gemäß der Fig. 2;
- Fig. 4: ein Flussdiagramm, das die Grundschritte des verwendeten Kommissionierverfahrens zeigt; und
- Fig. 5: ein Flussdiagramm des Kommissionierverfahrens gemäß der Erfindung.

In der nachfolgenden Beschreibung werden einige Begriffe auftauchen, die bereits im einleitenden Teil der Beschreibung definiert wurden. Diese Definitionen gelten weiterhin, insbesondere in Bezug auf die Begriffe "Batch" und "Batch-Picking".

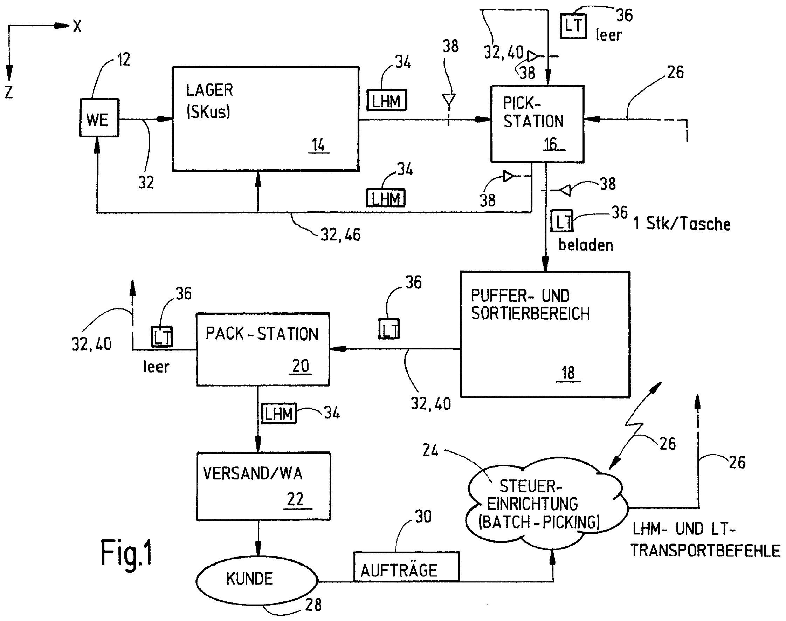

Fig. 1 zeigt ein Blockdiagramm eines Kommissioniersystems 10 gemäß der Erfindung. Das Kommissioniersystem 10 kann einen Wareneingang (WE) 12, ein Lager 14, eine Pick-Station 16, einen Puffer- und Sortierbereich 18, eine Pack-Station 20 und einen Versand bzw. Warenausgang (WA) 22 aufweisen. Übergeordnet weist das System 10 eine Steuereinrichtung 24 auf, die mit den verschiedenen Elementen des Systems 10 über (feste oder drahtlose) Datenverbindungen 26 kommuniziert.

Die Elemente 12 bis 22 können materialflusstechnisch mittels einer oder mehrerer Fördertechniken 32 (Rollenförderer, Gurtförderer, Riemenförderer, Kettenförderer, Hängeförderer, etc.) miteinander verbunden sein. Die in der Fig. 1 gezeigten fördertechnischen Verbindungen sind lediglich exemplarischer Natur. Es versteht sich, dass weitere und andere Verbindungen zwischen den verschiedenen Elementen 12 bis 22 vorgesehen werden können.

Soweit ein Wareneingang 12 vorhanden ist, werden dort Waren, üblicherweise artikelrein, angeliefert. Man spricht von artikelreinen Waren, wenn eine Einheit lediglich Artikel eines einzigen Typs enthält. Die Begriffe "Waren", "Artikel", "Produkte" und "Stückgüter" werden hier synonym verwendet. Die Stückgüter können im Wareneingang 12 vereinzelt und/oder umgepackt werden. So können zum Beispiel Stückgüter, die auf Paletten angeliefert werden, in Behälter oder auf Tablare umgeladen werden, die dann im Lager 14 als Bestandeinheiten (SKUs) bevorratet werden. Beim Lager 14 kann es sich zum Beispiel um ein automatisiertes Kleinteilelager (AKL) handeln. Es versteht sich, dass das Lager 14 auch durch andere Lagertypen realisiert sein kann, wie zum Beispiel durch ein Hochregallager, wo beispielsweise Stückgüter auf (Euro-)Paletten als Bestandseinheiten bevorratet werden.

Die Steuereinrichtung 24 hat mehrere Aufgaben und kann dezentral aufgebaut sein. Die Steuereinrichtung 24 kann modular aufgebaut sein und folgende Funktionen implementieren: Auftragsverwaltung, Kommissionierleitstrategien, Warenwirtschaftssystem, welches wiederum eine Lagerverwaltung umfassen kann, die wiederum einen Materialfluss sowie eine Platzverwaltung beinhalten kann, und/oder eine Schnittstellenverwaltung. Diese Funktionen sind üblicherweise in Form von Software und/oder Hardware implementiert. Eine Kommunikation kann über einen (oder mehrere) Kommunikationsbus(se) stattfinden. Die Steuereinrichtung 24 kann Teil eines Zentralrechners (nicht dargestellt) sein.

Die Auftragsverwaltung sorgt dafür, dass von Kunden 28 eingehende (Kommissionier-)Aufträge 30 zur Erledigung (Abarbeitung) auf eine oder mehrere Pick-Stationen 16 verteilt werden, von denen exemplarisch eine in der Fig. 1 gezeigt ist. Dabei spielen Faktoren wie Auslastung, Stückgutsortimentsverteilung, (Förder-)Wegoptimierungen und Ähnliches eine Rolle. Der Pick-Station 16 können komplette Aufträge, aber auch nur Teilaufträge zur Abarbeitung zugewiesen werden. Jedoch wird an der bzw. den Pick-Stationen 16 "Batch-Picking" betrieben. Dies bedeutet, dass alle Artikel eines bestimmten Artikeltyps (parallel) für mehrere Aufträge 30 kommissioniert werden. Nicht alle Artikeltypen (Auftragszeilen) eines Kommissionierauftrags 30 müssen aber an der gleichen Pick-Station 16 kommissioniert werden. Die Pick-Station 16 dient als Kommissionierarbeitsplatz bzw. Umfüllarbeitsplatz, wo die Stückgüter aus einer Quelle (Lagerladehilfsmittel) gegriffen und an ein Ziel (Ladungsträger) abgegeben werden, wie es nachfolgend noch genauer erläutert werden wird. Üblicherweise wird ein Kommissionierauftrag an der Pick-Station 16 nicht fertig abgearbeitet. Die Stückgüter werden in einen Puffer-Ladungsträger umgeladen, bevor sie später an einen Auftragsladungsträger abgegeben werden, wie es nachfolgend noch ausführlicher beschrieben werden wird.

Die Steuereinrichtung 24 ist angepasst, eingegangene Kommissionieraufträge 30 dahingehend zu analysieren, dass eine Vielzahl von Batches gebildet wird, wobei eine Batch sich durch die Summe aller Artikel eines jeweiligen Artikeltyps über alle Aufträge 30 auszeichnet. Die Steuereinrichtung 24 erzeugt dann entsprechende Transportbefehle für Ladehilfsmittel (LHM) 34, die nachfolgend auch als Lagerladehilfsmittel (LLHM) 34 bezeichnet werden, sowie für Ladungsträger (LT) 36. Die LHM 34 stellen Quellen dar, während die LT 36 Ziele darstellen. Bei den LHM 34 kann es sich um Paletten, Behälter, Kartons, Tablare oder Ähnliches handeln, die bevorzugt sorten- bzw. artikelrein als SKUs im Lager 14 vorgehalten werden. Die LT 36 sind in Form von (Hänge-)Taschen 44 oder dergleichen realisiert sein.

Die LHM 34 werden zum Beispiel mittels (nicht dargestellten) Regalbediengeräten aus nicht näher dargestellten Regalen im Lager 14 ausgelagert und über eine Lagerladehilfsmittel-Fördertechnik 46 zur Pick-Station 16 transportiert. Die Lagerladehilfsmittel-Fördertechnik 46 kann durch Rollenförderer, Gurtförderer, Kettenförderer, Riemenförderer oder dergleichen realisiert sein. Im Nachfolgenden wird exemplarisch ein Transport von Lagerbehältern betrachtet werden. Die LT 36 werden über eine Ladungsträger-Fördertechnik 40 von der und zu der Pick-Station 16 transportiert. Als LT 36 werden nachfolgend (Hänge-)Taschen 44 betrachtet werden, die mittels eines Hängeförderers bzw. Hängefördersystems 42 (Ladungsträger-Fördertechnik 40) transportiert werden. Eine exemplarische (Transport-)Tasche 44 für den Hängeförderer 42 ist in der deutschen Patentanmeldung DE 10 2011 101 987 beschrieben, die am 17.05.2011 eingereicht wurde. Die Taschen 44 werden mittels Adaptern an ein Zugmittel des Hängeförderers 42 gekoppelt. Ein exemplarischer (Gleit-)Adapter der oben erwähnten Art ist in der deutschen Patentanmeldung DE 10 2011 045 725 gezeigt, die am 08.09.2010 eingereicht wurde. Ein exemplarisches Zugmittel in Form einer Zugstange ist in der deutschen Patentanmeldung DE 10 2011 053 426 offenbart, die am 30.11.2010 eingereicht wurde.

Zurückkehrend zur Fig. 1 kann stromaufwärts zur Pick-Station 16 ein Sensor 38 (zum Beispiel Lichtschranke, Lichttaster oder Ähnliches) vorgesehen werden, um eine Zufuhr von LHM 34 über die Fördertechnik 46 zu überwachen und zu erfassen. Sobald die gemäß der von der Steuereinrichtung 24 gebildeten Batchs vorgegebene Anzahl von Artikeln eines jeweiligen Artikeltyps aus den LHM 34 an der Pick-Station 16 entnommen wurden, kann das (mitunter nur teilweise) geleerte LHM 34 über die Fördertechnik 46 in das Lager 14 oder den Wareneingang 12 zwecks erneuter Befüllung zurücktransportiert werden. Der Abtransport eines derartigen LHM 34 kann wiederum mit einem Sensor 38 überwacht und erfasst werden, der stromabwärts zur Pick-Station 16 angeordnet ist. Die Sensoren 38 stehen datentechnisch mit der Steuereinrichtung 24 in Verbindung, um es der Steuereinrichtung 24 zu ermöglichen, LHM- und LT-Ströme zu erfassen und miteinander zu koordinieren. Die Steuereinrichtung 24 achtet darauf, dass, wenn ein oder mehrere LHM 34, die durch eine aktuelle Batch vorgegeben sind, an der Pick-Station 16 zur Entnahme bereitgestellt wird, eine entsprechende, durch die Batch vorgegebene, Anzahl von leeren LT 36 an der Pick-Station 16 bereitgestellt wird.

Wie es nachfolgend noch näher erläutert werden wird, wird an der Pick-Station 16 immer nur ein einziger Artikel aus dem gerade zu bearbeitenden LHM 34 entnommen und in einen leeren LT 36 abgegeben. Der LT 36 ist dann gefüllt (d.h. ein Artikel pro Tasche 44) und kann über die Fördertechnik 40 die Pick-Station 16 verlassen. Eingangsseitig und/oder ausgangsseitig zur Pick-Station 16 können ein oder mehrere Sensoren 38 im Bereich der Fördertechnik 40 vorgesehen werden, um den Zufluss und/oder Abfluss von leeren bzw. gefüllten LT 36 zu überwachen und zu erfassen. Die Sensoren 38 sind, soweit vorhanden, datentechnisch mit der Steuereinrichtung 24 verbunden.

Gefüllte LT 36, insbesondere mit nur einem einzigen Artikel gefüllte Taschen 44, werden mit der Fördertechnik 40 in einen Puffer- und Sortierbereich 18 transportiert. Eine exemplarische Implementierung des Puffer- und Sortierbereichs 18 ist in der deutschen Patentanmeldung DE 10 2011 103 194 beschrieben, die am 31.05.2011 eingereicht wurde. Eine weitere exemplarische Implementierung eines Sorters ist in der deutschen Patentanmeldung DE 102011 104511 beschrieben, die am 15.06.2011 eingereicht wurde.

Bis zur Pick-Station 16 hat die Handhabung der Stückgüter artikelorientiert stattgefunden. Im Puffer- und Sortierbereich 18 erfolgt die Stückguthandhabung auftragsorientiert. Dies bedeutet, dass die gefüllten LT 36 im Bereich 18 nach Aufträgen 30 sortiert und anschließend ausgeschleust werden. Die Ausschleusung erfolgt wiederum über die Fördertechnik 40, und zwar in einer nach Aufträgen 30 sortierten Reihenfolge. Es kann zur Packstation 20 und/oder zum Versand bzw. Waren ausgang 22 ausgeschleust werden.

In der Packstation 20 können die Artikel aus dem LT 36 entnommen und in ein beliebiges Ladehilfsmittel 34 (Palette, Behälter, Karton, Tablar, etc.) umgeladen werden. Die so geleerten LT 36 können über die Fördertechnik 40 zurück zur Pick-Station 16 transportiert werden, um für neue Batches bereitzustehen.

Wenn ein vollständiger Auftrag 30 auf ein LHM 34 in der Packstation 20 umgeladen wurde, kann das entsprechende LHM 34 über eine Fördertechnik 32 in den Versand 22 transportiert werden, wo das LHM 34 zum Beispiel mit einer Folie umwickelt werden kann, um ein Verrutschen der einzelnen Stückgüter auf den LHM 34 zu verhindern. Anschließend werden die so fertig kommissionierten LHM 34 an den Kunden 28 verschickt.

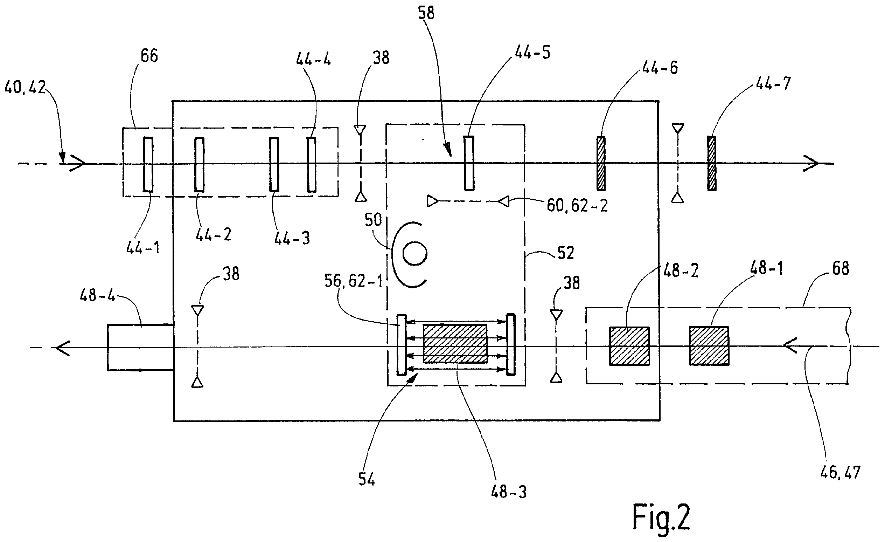

Bezugnehmend auf Fig. 2 ist ein Blockdiagramm einer exemplarischen Pick-Station 16 gezeigt, wie sie zum Beispiel in der Fig. 1 zum Einsatz kommt. Die Pick-Station 16 stellt einen (räumlichen) Bereich innerhalb des Kommissioniersystems 10 dar, wo ein Kommissionierer 50 Artikel manuell aus Lagerladehilfsmitteln 34 entnimmt und in Ladungsträger 36 abgibt. Die Pick-Station 16 weist strukturelle Komponenten auf, die zur Erfüllung dieser Aufgabe erforderlich sind. Die Pick-Station 16 weist einen Arbeitsbereich 52 auf, innerhalb dem die manuelle Arbeit des Kommissionierers 50 stattfindet. Der Arbeitsbereich 52 ist üblicherweise kleiner als der (räumlich/logische) Bereich der Pick-Station 16.

Die Pick-Station 16 wird sowohl von der Ladungsträger-Fördertechnik, 40 als auch von der Lagerladehilfsmittel-Fördertechnik 46 durchquert. Wie bereits oben erwähnt, ist die Ladungsträger-Fördertechnik 40 als Hängeförderer 42 mit Taschen 44 als Ladungsträgern 36 gezeigt. Die Lagerladehilfsmittel-Fördertechnik 46 ist exemplarisch in Form einer Rollenbahn 47 implementiert, um zum Beispiel (Lager-)Behälter 48 als Lagerladehilfsmittel 34 von der und zur Pick-Station 16 zu transportieren. Leere Taschen 44 sind in der Fig. 2 hell dargestellt, wohingegen gefüllte Taschen 44 dunkel dargestellt sind. Die Taschen 4.4-1 bis 44-5 sind leer. Die Taschen 44-6 und 44-7 gefüllt sind. Die Lagerbehälter 48-1 bis 48-3 sind gefüllt. Der Lagerbehälter 48-4, der stromabwärts zur Pick-Station 16 liegt, ist teilweise leer oder vollständig geleert.

Der Arbeitsbereich 52 weist einen Entnahmeposition 54 und eine Abgabeposition 58 auf. Die Entnahmeposition 54 stellt den Ort der Bereitstellung eines (einzigen) Lagerbehälters 48 dar. In der Fig. 2 wird der Lagerbehälter 48-3 zwecks Entnahme von Artikeln bereitgestellt. Oberhalb der Öffnung des Behälters 48 kann ein Lichtgitter 56 angeordnet sein, um die Entnahme von Artikeln aus dem Behälter 48-3 zu überwachen und zu erfassen. Der Lagerbehälter 48-3 dient als Quelle für eine Batch, die gerade aktuell bearbeitet wird. Der Lagerbehälter 48-3 enthält vorzugsweise Artikel eines einzigen Artikeltyps und ist somit sortenrein. Es versteht sich, dass auch mehrfach unterteilte Lagerbehälter 48 eingesetzt werden können, wobei dann jedes Fach sortenrein mit anderen Artikeltypen befüllt sein kann. Die Entnahmeposition 54 befindet sich in einem Bereich der Fördertechnik 46, wo der Behälter 48-3 angehalten wird.

Die Abgabeposition 58 ist Teil der Fördertechnik 40 und ist vorzugsweise so dimensioniert, dass nur eine einzige Tasche 44, hier die leere Tasche 44-5, zwecks Befüllung mit einem entnommenen Artikel bereitgestellt werden kann. Die Abgabe eines aus dem Lagerbehälter 48-3 entnommenen Artikels in die leere Tasche 44-5 wird zum Beispiel mit einer Lichtschranke 60 überwacht und erfasst, die vorzugsweise im unmittelbaren Bereich der Öffnung der Tasche 44-5 angeordnet ist.

Das Lichtgitter 56 an der Entnahmeposition 54 und die Lichtschranke 60 an der Abgabeposition 58 stellen eine erste Überwachungseinrichtung 62-1 und zweite Überwachungseinrichtung 62-2 dar, die datentechnisch mit der Steuereinrichtung 24 verbunden sind. Die Steuereinrichtung 24 kann somit nachverfolgen, wann ein Artikel aus dem Lagerbehälter 48-3 entnommen und wann er in die Tasche 44-5 abgegeben wird. In Kenntnis dieser Informationen ist es für die Steuereinrichtung 24 möglich, die Ladungsträgerströme und die Lagerladehilfsmittelströme so aufeinander abzustimmen bzw. so zu koordinieren, dass eine gefüllte Tasche 44 eine leere Tasche 44 automatisch ersetzt wird, sobald die Abgabe erfolgt ist, ohne dass der Kommissionierer die Abgabe manuell bestätigen muss. Analoges gilt für die Zu- und Abführung der Behälter 48. Sobald die Abgabe eines entnommenen Artikels erfasst wurde, kann die Steuereinrichtung 24 den Abtransport der gefüllten Tasche 44 veranlassen, wie zum Beispiel den Abtransport der Taschen 44-6 und 44-7. Gleichzeitig kann die Steuereinrichtung 24 den Antransport weiterer leerer Taschen 44 veranlassen, wie den Antransport der Taschen 44-1 bis 44-4. Die leeren Taschen 44-1 bis 44-4 befinden sich in einem (logischen) Ladungsträger-Puffer 66, der einen Abschnitt der Ladungsträger-Fördertechnik 40 darstellt, der stromaufwärts zur Abgabeposition 58 liegt und direkt an die Abgabeposition 58 angrenzt. Der Puffer 66 kann sich räumlich über die Pick-Station 16 hinaus erstrecken. Ein Ziel der Koordination der verschiedenen Ströme ist es, den Kommissionierer 50 nie warten zu lassen. Der Kommissionierer 50 bekommt also immer einen Lagerbehälter 48 und ausreichend leere Taschen 44 zur Bearbeitung der aktuellen Batch bereitgestellt. Die Steuereinrichtung 24 trägt dafür Sorge, dass immer ausreichend leere Taschen 44 im Puffer 66 vorhanden sind. Analog trägt die Steuereinrichtung 24 dafür Sorge, dass immer ausreichend Lagerbehälter 48 in einem Lagerladehilfsmittel-Puffer 68 vorhanden sind, um einen Lagerbehältertausch zu veranlassen, wenn alle Artikel eines Lagerbehälters 48 entnommen und abgegeben wurden. In diesem Fall ist eine aktuelle Batch abgearbeitet. Dann rückt eine neue "Batch" in Form eines neuen Lagerbehälters nach, der hier exemplarisch durch den Lagerbehälter 48-2 implementiert ist. Quittiertasten und Ähnliches werden nicht benötigt.

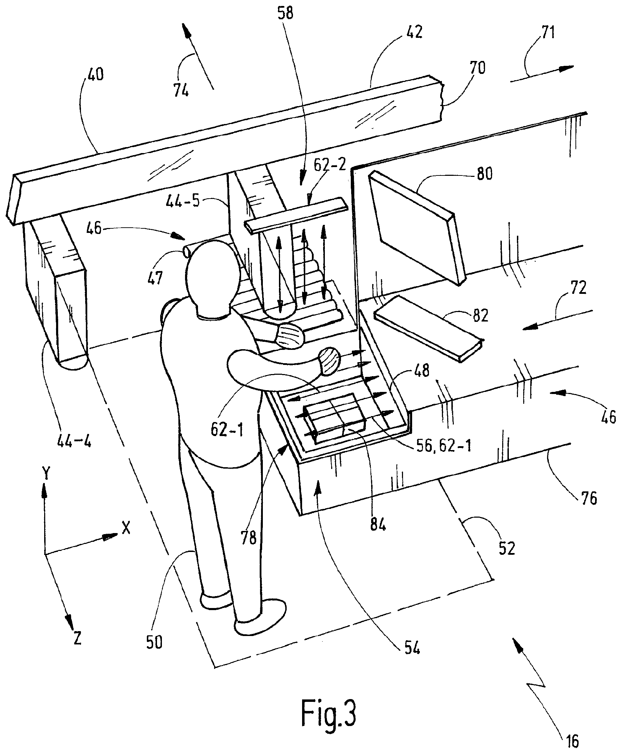

In Fig. 3 ist eine exemplarische Ausgestaltung einer Pick-Station 16 in perspektivischer Darstellung gezeigt. Die Lagerladehilfsmittel 34 sind wiederum exemplarisch in Form von Lagerbehältern 48 implementiert, die über die Lagerladehilfsmittel-Fördertechnik 46 in den Arbeitsbereich 52 zur Entnahmeposition 54 transportiert werden. Um zu gewährleisten, dass der Kommissionierer 50 nur auf einen einzigen Lagerbehälter 48 zugreifen kann, der durch die aktuell zu bearbeitende Batch vorgegeben ist, kann die Fördertechnik 46 zum Beispiel mit einem Gehäuse 76 verdeckt sein, das eine Öffnung 78 aufweist. Die Öffnung 78 lässt lediglich einen Zugriff auf einen einzigen Lagerbehälter 48 zu. Im Lagerbehälter 48 sind exemplarisch vier Artikel 84 (einer Sorte) gezeigt. Oberhalb der Öffnung des Lagerbehälters 48, d.h. im Bereich der Öffnung 78 des Gehäuses 76, ist die erste Überwachungseinrichtung 62-1 in Form eines Lichtgitters 56 gezeigt. Die Lichtstrahlen des Lichtgitters 56 sind durch mehrere parallele Doppelpfeile angedeutet. Die Lagerbehälter 48 werden parallel zur Längsrichtung X zugeführt (vgl. Pfeil 72) und parallel zur Querrichtung Z abgeführt (vgl. Pfeil 74). Die Fördertechnik 46 ist exemplarisch in Form einer Rollenbahn 47 gezeigt.

In der Fig. 3 liegt die Abgabeposition 58 direkt der Entnahmeposition 54 gegenüber. Es versteht sich, dass die Entnahmeposition 54 und die Abgabeposition 58 auch beabstandet zueinander angeordnet sein können, wobei darauf zu achten ist, dass der Kommissionierer 50 so wenig wie möglich und bestenfalls gar nicht laufen muss, um einen entnommenen Artikel 84 in eine leere Tasche 44 (hier die Tasche 44-5 an der Abgabeposition 58) abzugeben. Die leeren Taschen 44 werden mit Hilfe eines Hängeförderers 42 zur Abgabeposition 58 transportiert (vgl. Pfeil 71). Die Ladungsträger-Fördertechnik 40, d.h. der Hängeförderer 42, umfasst eine Führungsschiene 70, wie sie in der bereits oben zitierten deutschen Patentanmeldung offenbart ist. Die Entnahmeposition 58 kann leicht höher (Y-Richtung) als die Entnahmeposition 54 angeordnet sein, um ein Kreuzen der Fördertechniken 40 und 46 zu ermöglichen. Deshalb baut die Pick-Station 16 der Fig. 3 sehr kompakt.

Bei der Abgabeposition 58 ist die zweite Überwachungseinrichtung 62-2 ebenfalls in Form eines Lichtgitters 56 implementiert. Die Lichtstrahlen der zweiten Überwachungseinrichtung 62-2 sind ebenfalls in Form paralleler Doppelpfeile angedeutet, die sich vorzugsweise unmittelbar vor der Öffnung der Tasche 44-5 in der XY-Ebene erstrecken. Die zweite Überwachungseinrichtung 62-2 ist so ausgebildet, dass die Abgabe eines entnommenen Artikels 84 in die leere Tasche 44-5 auf jeden Fall erfasst werden kann. Die Abgabe des entnommenen Artikels 84 setzt die Nachführung einer neuen leeren Tasche, hier der Tasche 44-4 sowie die Abfuhr der Tasche 44-5, in Gang. Ähnliches gilt für die erste Überwachungseinrichtung 62-1, die so ausgebildet ist, dass die Entnahme eines Artikels 84 sicher erfasst werden kann. Die Steuereinrichtung 24 kann so nachverfolgen, wie viele Artikel 84 aus dem Behälter 48 entnommen wurden, um das Ende der Bearbeitung der aktuellen Batch festzustellen. Dabei ist es von großem Vorteil, wenn immer nur ein einziger Artikel 84 entnommen und abgegeben werden darf. Die Kommissionierleistung an einem derartigen Arbeitsplatz kann ohne Probleme 2000 Zugriffe pro Stunde überschreiten.

Optional weist die Pick-Station 16 zusätzlich eine Anzeige 80 und/oder eine Eingabeeinrichtung 82 auf, die informationstechnisch mit der Steuereinrichtung 24 verbunden sind. Über die Anzeige 80 (z.B. Monitor) kann dem Kommissionierer 50 zum Beispiel ein Bild des gerade zu bearbeitenden Artikels 84 eingeblendet werden. Auf diese Weise ist es möglich, dass der Kommissionierer 50 nochmals überprüft, ob die Steuereinrichtung 24 auch tatsächlich den richtigen Behälter 48 angedient hat. Über die Eingabeeinrichtung 82 (z.B. Tastatur) kann der Kommissionierer 50 der Steuereinrichtung 24 Probleme mitteilen. So ist es zum Beispiel möglich, dass ein Lagerbehälter 48 nicht die erwartete Anzahl von Artikeln 84 aufweist, um alle Artikel 84 einer Batch an leere Taschen 44 abzugeben. In diesem Fall kann der Kommissionierer 50 die Steuereinrichtung 24 über die "Unterversorgung" informieren, so dass die Steuereinrichtung 24 geeignete Gegenmaßnahmen einleiten kann.

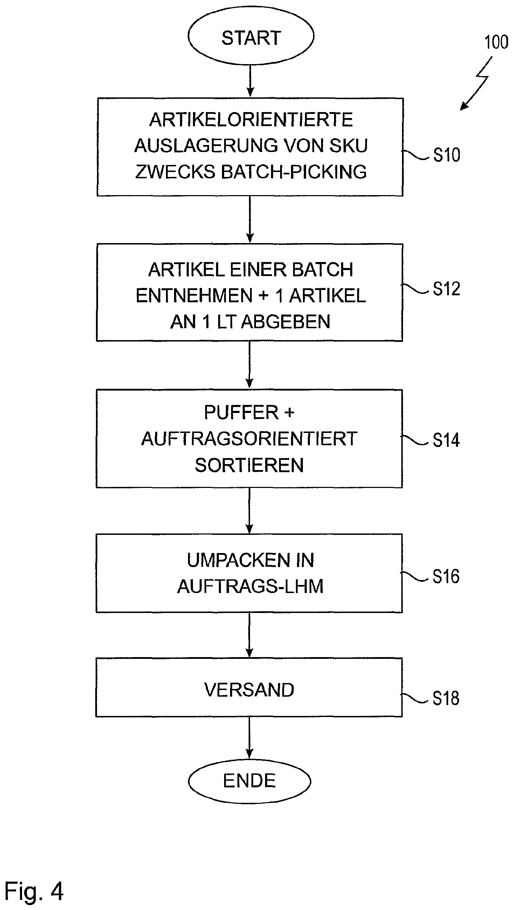

Bezugnehmend auf Fig. 4 ist ein erstes Flussdiagramm 100 gezeigt, welches die grundsätzlichen Schritte des angewandten Kommissionierverfahrens zeigt. Das Verfahren 100 ist sowohl als B2B- als auch B2C-Lösung anwendbar, insbesondere im Bereich des E-Commerce.

In einem ersten Schritt S10 erfolgt eine artikelorientierte Auslagerung von SKUs zwecks Batch-Picking, nachdem eine Gruppe von Aufträgen 30 gesammelt und zwecks Batch-Picking analysiert und zusammengefasst wurde. Sobald die entsprechende SKU an der Pick-Station 16 angekommen ist, werden alle Artikel 84 einer Batch (nacheinander) entnommen, wobei jeweils immer nur ein Artikel entnommen und in eine Tasche 44 abgegeben wird (vgl. Schritt S12). Wenn alle Artikel einer Batch entnommen und abgegeben sind, wird die SKU bei der Pick-Station 16 ausgetauscht und eine neue Gruppe leerer Ladungsträger 16 bereitgestellt, um die nächste Batch bzw. die neue SKU abzuarbeiten. Die gefüllten Ladungsträger 36 der gerade bearbeiteten Batch werden in den Puffer- und Sortierbereich 18 transportiert, wo sie auftragsorientiert sortiert werden können (vgl. Schritt S14). Die entsprechenden Ladungsträger 36 verlassen dann den Bereich 18 in einer nach Aufträgen sortierten Reihenfolge, so dass die gefüllten Ladungsträger 36 dann in einem Schritt S16, soweit dies erforderlich ist, in ein Auftrags-Ladehilfsmittel umgepackt werden können. In einem Schritt S18 können die Auftrags-Ladehilfsmittel, die dann alle Artikel des Auftrags 30 enthalten, versendet werden.

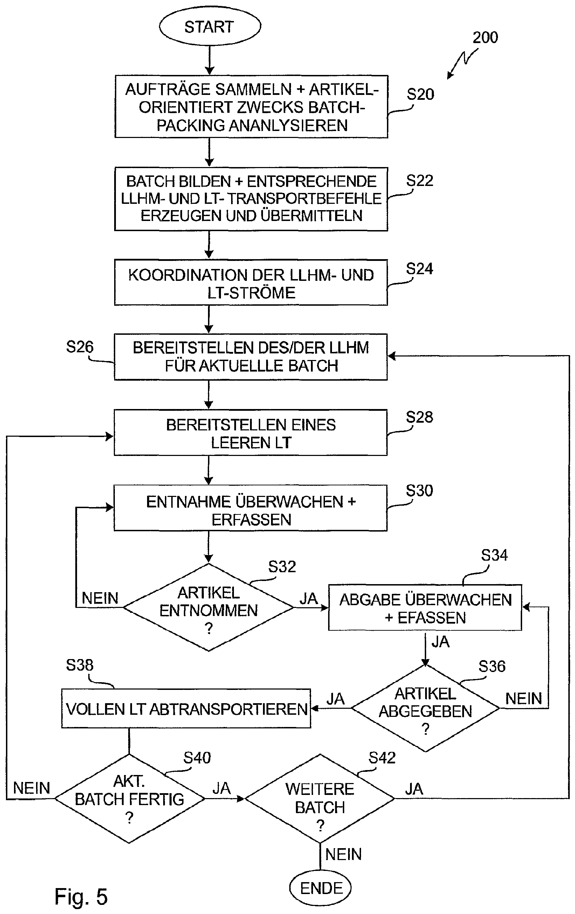

In Fig. 5 ist ein weiteres Flussdiagramm 200 gezeigt, das das Kommissionierverfahren gemäß der Erfindung näher beschreibt.

In einem ersten Schritt S20 wird eine Mehrzahl von Aufträgen 30 gesammelt und artikelorientiert zwecks Batch-Picking durch die Steuereinrichtung 24 analysiert. Anschließend werden in einem Schritt S22 entsprechende Batches gebildet, wobei insbesondere eine Summe aller Artikel eines jeweiligen Artikeltyps zu einer Batch zusammengefasst wird, so dass alle Artikeltypen, die in der Gruppe der Kommissionieraufträge 30 vorkommen, bei einer jeweiligen Batch bearbeitet werden. Anschließend erzeugt die Steuereinrichtung 24 entsprechende Transportbefehle für die Lagerladehilfsmittel 34 und die Ladungsträger 36, die sie an die entsprechenden Fördertechnikkomponenten übermittelt. In einem Schritt S24 koordiniert die Steuereinrichtung 24 die Ströme der Lagerladehilfsmittel 34 und der Ladungsträger 36, um zu gewährleisten, dass der Kommissionierer 50 vorzugsweise ohne Stillstand bzw. Wartezeit und manueller Quittierung kontinuierlich an der Pick-Station 16 arbeiten kann.

Zu diesem Zweck werden ein oder mehrere Lagerladehilfsmittel 34 zur Abarbeitung der aktuellen Batch an der Entnahmeposition 54 bereitgestellt (vgl. Schritt S26). Entsprechend wird ein leerer Ladungsträger 36 an der Entnahmeposition 58 bereitgestellt (vgl. Schritt S28). In einem Schritt S30 wird die Entnahme eines Artikels 84 aus einem Lagerladehilfsmittel 34 überwacht und erfasst, indem die Steuereinrichtung 24 entsprechend informiert wird (vgl. Schritt S30). In einem Schritt S32 wird abgefragt, ob ein Artikel 84 aus dem an der Entnahmeposition 54 bereitgestellten Lagerladehilfsmittel 34 entnommen wurde. Wurde kein Artikel 84 entnommen, kehrt man zum Schritt S30 zurück. Wurde ein Artikel 84 entnommen, wird in einem Schritt S34 die Abgabe des entnommenen Artikels 84 überwacht und erfasst. Dazu wird die zweite Überwachungseinrichtung 62-2 eingesetzt. In einem Schritt S36 wird dann abgefragt, ob der entnommene Artikel 84 tatsächlich abgegeben wurde. Ist keine Abgabe erfolgt, kehrt man zum Schritt S34 zurück. Wurde der Artikel 84 aber abgegeben, so wird in einem Schritt S38 der volle Ladungsträger 36 abtransportiert (z.B. in den Puffer- und Sortierbereich 18 der Fig. 1). Danach kann einem Schritt S40 abgefragt werden, ob die aktuelle Batch nun fertig abgearbeitet ist, indem zum Beispiel die Anzahl der erfassten Artikelentnahmen (S30 und S32) überprüft wird. Wenn die aktuelle Batch noch nicht fertig abgearbeitet ist, kehrt man zum Schritt S28 zurück. Anderenfalls kann in einem Schritt S40 abgefragt werden, ob eine weitere Batch abzuarbeiten ist. Wenn eine weitere Batch abzuarbeiten ist, kehrt man zum Schritt S26 zurück. Anderenfalls endet das Verfahren der Erfindung.

In der oben stehenden Beschreibung der Figuren hat man sich bei der Wahl der Orientierung der Koordinatensysteme generell an die in der Lagerlogistik übliche Bezeichnung gehalten, so dass die Längsrichtung mit X, Querrichtung Z und die (vertikale) Höhe mit Y bezeichnet wurde.

Des Weiteren wurden gleiche Teile und Merkmale mit gleichen Bezugszeichen versehen. Die in der Beschreibung enthaltenen Offenbarungen sind sinngemäß auf gleiche Teile und Merkmale mit denselben Bezugszeichen übertragbar. Lage- und Oricnticrungsangabcn (z.B. "oben", "unten", "seitlich", "längs", "horizontal", "vertikal" und Ähnliches) sind auf die unmittelbar beschriebene Figur bezogen. Bei einer Änderung der Lage oder Orientierung sind diese Angabe aber sinngemäß auf die neue Lage- bzw. Orientierung zu übertragen.

## Patentansprüche

1. Kommissioniersystem (10), das nach dem "Ware-zum-Mann"-Prinzip betrieben wird, mit:
einem Artikellager (12);
einer Lagerladehilfsmittel-Fördertechnik (46) zum automatisierten Transport von Lagerladehilfsmitteln (34) von und zu dem Artikellager (12);
einer Ladungsträger-Fördertechnik (40) zum Transport von Ladungsträgern (36), wobei jeder Ladungsträger (36) ausgebildet ist, einen Artikel (84) aufzunehmen, um den Artikel (84) innerhalb des Kommissioniersystems (10) zu transportieren;
einer Pick-Station (16), die von einem Kommissionierer (50) betrieben wird und die über die Lagerladehilfsmittel-Fördertechnik (46) materialflusstechnisch mit dem Artikellager (12) verbunden ist und die materialflusstechnisch an die Ladungsträger-Fördertechnik (40) gekoppelt ist, wobei die Pick-Station (16) eine erste Überwachungseinrichtung (62-1) und eine zweite Überwachungseinrichtung (62-2) aufweist, wobei die erste Überwachungseinrichtung (62-1) so angeordnet ist, dass eine manuelle Entnahme eines Artikels (84) aus einem der an einer Entnahmeposition (54) bereitgestellten Lagerladehilfsmitteln (34) erfassbar ist, und wobei die zweite Überwachungseinrichtung (62-2) so angeordnet ist, dass eine manuelle Abgabe des entnommen Artikels (84) in genau einen der an einer Abgabeposition (58) bereitgestellten Ladungsträger (36; 44-5) erfassbar ist, wobei die Entnahmeposition (54) und die Abgabeposition (58) innerhalb eines Arbeitsbereichs (52) der Pick-Station (16) angeordnet sind, wo der Kommissionierer (50) Artikel (84) entnimmt und abgibt; und
einer Steuereinrichtung (24), die kommunikationstechnisch mit der ersten Überwachungseinrichtung (62-1) und der zweiten Überwachungseinrichtung (62-2) verbunden ist, **dadurch gekennzeichnet, dass**
im Artikellager (12) eine Vielzahl von verschiedenen Artikeln (84) in den Lagerladehilfsmitteln (34) sortenrein gelagert sind;
die Steuereinrichtung (24) angepasst ist, eine Vielzahl von Kundenaufträgen (30) artikelorientiert so zu bearbeiten, dass die Lagerladehilfsmittel (34) vom Artikellager (12) zwecks Batch-Picking zur Pick-Station (16) transportiert werden, und
die Steuereinrichtung (24) angepasst ist, eine Anzahl von Artikelentnahmen aus dem an der Entnahmeposition (54) bereitgestellten Lagerladehilfsmittel (34) mitzuverfolgen, um einen Lagerladehilfsmittelaustausch an der Entnahmeposition (54) zu bewirken, wenn eine durch das Batch-Picking vorbestimmte Anzahl von Artikel (84) aus dem an der Entnahmeposition (54) bereitgestellten Lagerladehilfsmittel (34) entnommen wurde, und um jeweils einen Ladungsträgeraustausch an der Abgabeposition (58) zu bewirken, wenn die Abgabe des entnommenen Artikels (84) in den bereitgestellten Ladungsträger (36; 44-5) erfasst wurde.

2. Kommissioniersystem nach Anspruch 1, wobei die Ladungsträger-Fördertechnik (40) ein Hängefördersystem (42) ist und wobei die Ladungsträger (36) Taschen (44) sind, die vorzugsweise über Transportadapter des Hängefördersystems (42) transportiert werden.

3. Kommissioniersystem nach einem der Ansprüche 1 oder 2, wobei die Ladungsträger-Fördertechnik (40) einen Puffer (66) aufweist, der stromaufwärts zur Abgabeposition (58) liegt und an diese angrenzt, und wobei die Steuereinrichtung (24) angepasst ist, einen Lagerladehilfsmittelstrom und einen Ladungsträgerstrom so aufeinander abzustimmen, dass immer mindestens so viele Ladungsträger (36) im Puffer (66) bevorratet sind, wie Artikel (84) aus dem an der Entnahmeposition (54) bereitgestellten Lagerladehilfsmittel (34) entnommen werden müssen.

4. Kommissioniersystem nach einem der Ansprüche 1 bis 3, wobei die Steuereinrichtung (24) angepasst ist, einen Ladungsträgerstrom zur Abgabeposition (58) so zu koordinieren, dass für jeden Artikel (84) einer Batch jeweils ein Ladungsträger (36) ohne Wartezeit für den Kommissionierer (50) im Arbeitsbereich (52) bereitgestellt wird.

5. Kommissioniersystem nach einem der Ansprüche 1 bis 4, wobei immer nur ein einziger Artikel (84) aus dem an der Entnahmeposition (54) bereitgestellten Lagerladehilfsmittel (34) entnommen und in den an der Abgabeposition (58) bereitgestellten Ladungsträger (36) abgegeben wird.

6. Kommissioniersystem nach einem der Ansprüche 1 bis 5, das ferner einen Puffer- und Sortierbereich (18), eine Pack-Station (20) und/oder eine VersandStation (22) aufweist.

7. Kommissioniersystem nach einem der Ansprüche 1 bis 6, wobei die Pick-Station (16) mindestens eine weitere Überwachungseinrichtung (62) aufweist, die unmittelbar stromaufwärts vor der Entnahmeposition (54), stromabwärts nach der Entnahmeposition (54), stromaufwärts vor der Abgabeposition (58) und/oder stromabwärts nach der Abgabeposition (58) angeordnet ist.

8. Kommissioniersystem nach einem der Ansprüche 1 bis 7, wobei die Entnahmeposition (54) so ausgebildet ist, dass der Kommissionierer (50) manuell nur auf das an der Entnahmeposition (54) bereitgestellte Lagerladehilfsmittel (34) zugreifen kann.

9. Kommissioniersystem nach Anspruch 8, wobei die Pick-Station (16) ein geschlossenes Gehäuse (76) aufweist, das bei der Entnahmeposition (54) eine Öffnung (78) aufweist, die so groß ist, dass nur auf das bereitgestellte Lagerladehilfsmittel (34) zugegriffen werden kann, während der Kommissionierer (50) auf Lagerladehilfsmittel (34), die im Arbeitsbereich (52) auf der Lagerladehilfsmittel-Fördertechnik (46) transportiert werden, nicht zwecks eine Artikelentnahme zugreifen kann.

10. Kommissioniersystem nach einem der Ansprüche 1 bis 9, wobei die Entnahmeposition (54) und die Abgabeposition (58) derart nah zueinander angeordnet sind, dass der Kommissionier (50) zwischen der Entnahme und der Abgabe eines Artikels (84) nicht laufen muss.

11. Kommissioniersystem nach einem der Ansprüche 1 bis 10, wobei die Entnahmeposition (54) in Bezug auf eine Raumhöhe (Y) unterhalb der Abgabeposition (58) liegt.

12. Kommissioniersystem nach einem der Ansprüche 1 bis 11, wobei die Steuereinrichtung (24) angepasst ist, eine getaktete Bereitstellung der Lagerladehilfsmittel (34) und der Ladungsträger (36) an der Pick-Station (16) zu bewirken.

13. Verfahren zum manuellen Batch-Picken einer Vielzahl von Kommissionieraufträgen, wobei zu kommissionierende Artikel (84) nach dem "Ware-zum-Mann"-Prinzip gehandhabt werden, wobei ein Kommissioniersystem (10) gemäß einem der Ansprüche 1 bis 12 eingesetzt wird, mit folgenden Schritten:
a) Bereitstellen eines Lagerladehilfsmittels (34) an einer Entnahmeposition (54) zur Abarbeitung einer aktuellen Batch;
b) Bereitstellen eines leeren Ladungsträgers (36) an einer Abgabeposition (58);
Entnehmen eines Artikels aus dem bereitgestellten Lagerladehilfsmittel und Abgeben eines einzigen, entnommenen Artikels an den bereitgestellten leeren Ladungsträger;
c) Überwachen und Erfassen der Entnahme des, vorzugsweise einzigen, Artikels (84) aus dem an der Entnahmeposition (54) bereitgestellten Lagerladehilfsmittel (34);
d) Überwachen und Erfassen der Abgabe des einzigen, entnommen Artikels (84) bei der Abgabeposition (58), wenn die Entnahme des Artikels (84) erfasst wurde;
e) Abtransportieren des an der Abgabeposition (58) bereitgestellten, befüllten Ladungsträgers (36), wenn die Abgabe des entnommen Artikels (84) erfasst wurde;
f) Abfragen, ob die aktuelle Batch fertig abgearbeitet ist, und Zurückkehren zum Schritt b), wenn die aktuelle Batch nicht fertig abgearbeitet ist und anderenfalls;
g) Abfragen, ob eine weitere Batch abzuarbeiten ist; und
h) Zurückkehren zum Schritt a), wenn eine weitere Batch abzuarbeiten ist.

## Claims

1. An order-picking system (10) operating in accordance with the "goods-to-man" principle comprises:
an article warehouse (12);
a storage-load support conveying system (46) for transporting storage-load supports (34) in an automated manner from and to the article warehouse (12);
a load-carrier conveying system (40) for transporting load carriers (36), wherein each of the load carriers (36) is formed to receive an article (84) for transporting the article (84) within the order-picking system (10);
a picking station (16) which is operated by a picker (50) and which is connected in terms of material flow via the storage-load support conveying system (46) to the article warehouse (12) and which is coupled in terms of material flow to the load-carrier conveying system (40), wherein the picking station (16) comprises a first monitoring device (62-1) and a second monitoring device (62-2), wherein the first monitoring device (62-1) is arranged such that a manual removal of an article (84) from one of the storage-load supports (34), which is provided at a removal position (54), is detectable, and wherein the second monitoring device (62-2) is arranged such that a manual delivery of the removed article (84) into exactly one of the load carriers (36; 44-5), which is provided at a delivery position (58), is detectable, wherein the removal position (54) and the delivery position (58) are arranged within an operating area (52) of the picking station (16) where the picker (50) removes and delivers articles (84); and
a controlling device (24) which is connected in terms of communication to the first monitoring device (62-1) and the second monitoring device (62-2), **characterized in that**
in the article warehouse (12) a plurality of different articles (84) is stored in the storage-load supports (34) which respectively contain articles of one type only;
the controlling device (24) is adapted to process a plurality of customers orders (30) in an article-orientated manner such that the storage-load supports (34) are transported from the article warehouse (12), for the purpose of batch picking, to the picking station (16), and
the controlling device (24) is adapted to track a number of article removed from the storage-load supports (34), which articles are provided at the removal position (54), in order to effect a storage-load support exchange at the removal position (54) if a number of articles (84), which is predetermined by the batch picking, has been removed from the storage-load support (34), which is provided at the removal position (54), and in order to respectively effect a load-support exchange at the delivery position (58) if the delivery of the removed article (84) into the provided load support (36; 44-5) has been detected.

2. The order-picking system of claim 1, wherein the load-carrier conveying system (40) is an overhead conveying system (42), and wherein the load carriers (36) are bags (44) which are preferably transported by means of transport adapters of the overhead conveying system (42).

3. The order-picking system of one of claims 1 or 2, wherein the load-carrier conveying system (40) comprises a buffer (66) which is arranged upstream to the delivery position (58) and is arranged adjacent thereto, and wherein the controlling device (24) is adapted to adjust a storage-load support stream and a load-carrier stream to each other so that always at least as many load carriers (36) are stocked in the buffer as articles need to be removed from the storage-load supports (34) being provided at the removal position (54).

4. The order-picking system of any of claims 1 to 3, wherein the controlling device (24) is adapted to coordinate a load-carrier stream towards the delivery position (58) so that for each article (84) of a batch respectively one load carrier (36) is provided without waiting time for the picker (50) in the operating region (52).

5. The order-picking system of any of claims 1 to 4, wherein always only one single article (84) is removed from the storage-load support (34), which is provided at the removal position (54), and delivered into the load carrier (36) being provided at the delivery position (58).

6. The order-picking system of any of claims 1 to 5, further comprising a buffering and sorting region (18), a packing station (20), and/or a shipping station (22).

7. The order-picking system of any of claims 1 to 6, wherein the picking station (16) comprises at least one additional monitoring device (62) being arranged directly upstream in front of the removal position (54), downstream to the removal position (54), upstream in front of the delivery position (58), and/or downstream to the delivery position (58).

8. The order-picking system of any of claims 1 to 7, wherein the removal position (54) is formed such that the picker (50) can access manually only the storage-load support (34) being provided at the removal position (54).

9. The order-picking system of claim 8, wherein the picking station (16) comprises a closed housing (76), which comprises at the removal position (54) an opening (78) being so big that only the storage-load support (34), which is provided, can be accessed while the picker (50) cannot access storage-load supports (34), which are transported within the operating region (52) on the storage-load support conveying system (46), for the purpose of an article removal.

10. The order-picking system of any of claims 1 to 9, wherein the removal position (54) and the delivery position (58) are arranged such close to each other that the picker (50) does not need to walk between the removal and the delivery of one of the articles (84).

11. The order-picking system of any of claims 1 to 10, wherein the removal position (54) is located beneath the delivery position (58) relative to room height (Y).

12. The order-picking system of any of claims 1 to 11, wherein the controlling device (24) is adapted to effect a clocked provision of the storage-load supports (34) and the load carriers (36) at the picking station (16).

13. A method for manually batch-picking a plurality of picking orders, wherein to-be-picked articles (84) are handled in accordance with the "goods-to-man" principle, wherein an order-picking system (10) in accordance with any of claims 1 to 12 is used, comprising the steps of:
a) providing a storage-load support (34) at a removal position (54) for processing a current batch;
b) providing an empty load carrier (36) at a delivery position (58);
removing an article from the provided storage-load support and delivering one single removed article to the provided empty load carrier;
c) monitoring and detecting the removal of the, preferably one single, article (84) from the storage-load support (34) being provided at the removal position (54);
d) monitoring and detecting the delivery of the one single removed article (84) at the delivery position (58) if the removal of the article (84) has been detected;
e) transporting away the filled load carrier (36), which is provided at the delivery position (58), if the delivery of the removed article (84) has been detected;
f) inquiring whether the current batch is processed completely, and returning to step b) if the current batch is not processed completely and otherwise;
g) inquiring whether a further batch is to be processed; and
h) returning to the step a) if a further batch is to be processed.

## Revendications

1. Système de préparation de commandes (10), qui fonctionne selon le principe "marchandises vers l'homme", avec:
un stock d'articles (12);
un mécanisme de transport de contenants de stockage (46) pour le transport automatisé de contenants de stockage (34) à partir du et vers le stock d'articles (12);
un mécanisme de transport de contenants de charge (40) pour le transport de contenants de charge (36), dans lequel chaque contenant de charge (36) est configuré pour contenir un article (84), afin de transporter l'article (84) à l'intérieur du système de préparation de commandes (10);
une station de manutention (16), qui est pilotée par un préparateur de commandes (50) et qui est reliée selon la technique du flux de matières au stock d'articles (12) au moyen du mécanisme de transport de contenants de stockage (46) et qui est couplée selon la technique du flux de matières au mécanisme de transport de contenants de charge (40), dans lequel la station de manutention (16) présente un premier dispositif de surveillance (62-1) et un deuxième dispositif de surveillance (62-2), dans lequel le premier dispositif de surveillance (62-1) est disposé de telle manière qu'un prélèvement manuel d'un article (84) hors d'un des contenants de stockage (34) préparés à une position de prélèvement (54) puisse être détecté, et dans lequel le deuxième dispositif de surveillance (62-2) est disposé de telle manière qu'une délivrance manuelle de l'article prélevé (84) dans exactement un des contenants de charge (36; 44-5) préparés à une position de délivrance (58) puisse être détectée, dans lequel la position de prélèvement (54) et la position de délivrance (58) sont disposées à l'intérieur d'une zone de travail (52) de la station de manutention (16), où le préparateur de commandes (50) prélève et délivre des articles (84); et
un dispositif de commande (24), qui est relié selon la technique de communication au premier dispositif de surveillance (62-1) et au deuxième dispositif de surveillance (62-2), **caractérisé en ce que**
une multiplicité d'articles différents (84) sont stockés dans le stock d'articles (12) triés par sortes dans les contenants de stockage (34);
le dispositif de commande (24) est apte à traiter une multiplicité de commandes de clients (30) en orientation par articles, de telle manière que les contenants de stockage (34) soient transportés depuis le stock d'articles (12) pour la manutention par lots jusqu'à la station de manutention (16), et
le dispositif de commande (24) est apte à assurer le suivi d'un nombre de prélèvements d'articles hors du contenant de stockage (34) préparé à la position de prélèvement (54), afin d'opérer un échange de contenant de stockage à la position de prélèvement (54), lorsqu'un nombre d'articles (84) prédéterminé par la manutention par lots ont été prélevés hors du contenant de stockage (34) préparé à la position de prélèvement (54), et afin d'opérer respectivement un échange de contenant de charge à la position de délivrance (58), lorsque la délivrance de l'article prélevé (84) dans le contenant de charge préparé (36; 44-5) a été détectée.

2. Système de préparation de commandes selon la revendication 1, dans lequel le mécanisme de transport de contenants de charge (40) est un système de transport suspendu (42) et dans lequel les contenants de charge (36) sont des poches (44), qui sont transportées de préférence par des adaptateurs de transport du système de transport suspendu (42).

3. Système de préparation de commandes selon une des revendications 1 ou 2, dans lequel le mécanisme de transport de contenants de charge (40) présente une zone tampon (66), qui est située en amont de la position de délivrance (58) et est adjacente à celle-ci, et dans lequel le dispositif de commande (24) est apte à accorder l'un à l'autre un courant de contenants de stockage et un courant de contenants de charge, de telle manière qu'il y ait toujours en réserve dans la zone tampon (66) au moins autant de contenants de charge (36) qu'il y a d'articles (84) à prélever hors du contenant de stockage (34) préparé à la position de prélèvement (54).

4. Système de préparation de commandes selon l'une quelconque des revendications 1 à 3, dans lequel le dispositif de commande (24) est apte à coordonner un courant de contenants de charge à la position de délivrance (58), de telle manière que pour chaque article (84) d'un lot un contenant de charge (36) soit chaque fois préparé sans temps d'attente pour le préparateur de commandes (50) dans la zone de travail (52).

5. Système de préparation de commandes selon l'une quelconque des revendications 1 à 4, dans lequel uniquement un seul article (84) est toujours prélevé hors du contenant de stockage (34) préparé à la position de prélèvement (54) et délivré dans le contenant de charge (36) préparé à la position de délivrance (58).

6. Système de préparation de commandes selon l'une quelconque des revendications 1 à 5, qui présente en outre une zone de tampon et de tri (18), une station d'emballage (20) et/ou une station d'expédition (22).

7. Système de préparation de commandes selon l'une quelconque des revendications 1 à 6, dans lequel la station de manutention (16) présente au moins un autre dispositif de surveillance (62), qui est disposé immédiatement en amont avant la position de prélèvement (54), en aval après la position de prélèvement (54), amont avant la position de délivrance (58) et/ou en aval après la position de délivrance (58).

8. Système de préparation de commandes selon l'une quelconque des revendications 1 à 7, dans lequel la position de prélèvement (54) est configurée de telle manière que le préparateur de commandes (50) ne puisse accéder manuellement qu'au contenant de stockage (34) préparé à la position de prélèvement (54).

9. Système de préparation de commandes selon la revendication 8, dans lequel la station de manutention (16) présente une enceinte fermée (76), qui présente à la position de prélèvement (54) une ouverture (78), qui présente une grandeur telle que seul le contenant de stockage préparé (34) soit accessible, tandis que le préparateur de commandes (50) ne peut pas accéder pour prélever un article à des contenants de stockage (34), qui sont transportés dans la zone de travail (52) sur le mécanisme de transport de contenants de stockage (46).

10. Système de préparation de commandes selon l'une quelconque des revendications 1 à 9, dans lequel la position de prélèvement (54) et la position de délivrance (58) sont disposées à proximité l'une de l'autre, de telle manière que le préparateur de commandes (50) ne doive pas marcher entre le prélèvement et la délivrance d'un article (84).

11. Système de préparation de commandes selon l'une quelconque des revendications 1 à 10, dans lequel la position de prélèvement (54) se trouve, par rapport à une hauteur (Y), en dessous de la position de délivrance (58).

12. Système de préparation de commandes selon l'une quelconque des revendications 1 à 11, dans lequel le dispositif de commande (24) est apte à opérer une fourniture cadencée des contenants de stockage (34) et des contenants de charge (36) à la station de manutention (16).

13. Procédé pour la manutention manuelle par lots d'une multiplicité de commandes à préparer, dans lequel on manipule des articles à préparer (84) selon le principe "marchandises vers l'homme", dans lequel on utilise un système de préparation de commandes (10) selon l'une quelconque des revendications 1 à 12, comprenant les étapes suivantes:
a) préparer un contenant de stockage (34) à une position de prélèvement (54) pour l'élaboration d'un lot actuel;
b) préparer un contenant de charge vide (36) à une position de délivrance (58);
prélever un article hors du contenant de stockage préparé et délivrer un seul article prélevé dans le contenant de charge vide préparé;
c) surveiller et détecter le prélèvement de l'article (84), de préférence unique, hors du contenant de stockage (34) préparé à la position de prélèvement (54);
d) surveiller et détecter la délivrance de l'article unique prélevé (84) à la position de délivrance (58), lorsque le prélèvement de l'article (84) a été détecté;
e) évacuer le contenant de charge rempli (36) préparé à la position de délivrance (58), lorsque la délivrance de l'article prélevé (84) a été détectée;
f) demander si le lot actuel est complètement terminé, et retourner à l'étape b), lorsque le lot actuel n'est pas complètement terminé, et sinon;
g) demander si un autre lot doit être élaboré; et
h) retourner à l'étape a), lorsqu'un autre lot doit être élaboré.
